# EUROPEAN PATENT SPECIFICATION

(11) **EP 0 814 039 B1**
(45) Date of publication and mention of the grant of the patent: **13.02.2002**
(21) Application number: 96112014.4
(22) Date of filing: 25.07.1996
(51) Int. Cl.: B65G 47/08, B23Q 7/05, B21D 43/28, B21B 39/00, B23D 33/02

(54) **Apparatus for loading long work pieces**
Vorrichtung zum Zuführen langer Werkstücke
Appareil pour charger des pièces usinées longues

(30) Priority: 17.06.1996 JP 15581696
(43) Date of publication of application: 29.12.1997
(73) Proprietor: Tsune Seiki Co., Ltd., Nei-gun, Toyama-ken (JP)
(72) Inventor: Tsune, Ryoichi, Toyama-shi, Toyama-ken (JP)
(74) Representative: Füchsle, Klaus, Dipl.-Ing.

(56) References cited:
- DE-A- 3 334 467
- PATENT ABSTRACTS OF JAPAN vol. 9, no. 155 (M-392), 1985 & JP 60 031430 A (KAWASAKI)
- PATENT ABSTRACTS OF JAPAN vol. 14, no. 335 (M-1000), 1990 & JP 02 116446 A (SEIKI)

## Description

### BACKGROUND OF THE INVENTION AND RELATED ART STATEMENT

The present invention relates to a loading apparatus constituting a section for carrying steel bars, steel pipes or other long work pieces which are circular in cross section to a cutting apparatus or the like.

A conventional loading apparatus is shown, for example, in the Japanese Publication No. A-7-56256 (laid on December 25, 1995) of Examined Utility Application, which application was filed in the names of the same applicant and inventor as those in the present application. This loading apparatus includes a work transfer section 1 having horizontal rollers 2, on which long work pieces can be supported longitudinally movably. Sloping rails 4 overhang or extend outward from one side of the section, and incline upward toward their outer ends. Work pieces can be supported rollably in parallel with each other on the rails 4. A movable stopper 6 can move along each of the rails, and stop the first piece supported on the rails. A shift means 7 can shift the movable stoppers. A lock means 8 can lock the movable stoppers 6. Work shifters 3 can lift the first piece on the rails, and shift it onto the rollers 2 in the transfer section 1. Fixed positioners 15 are provided on the sides of the section 1 where the rails 4 are extended. The fixed positioners 15 can position at a reference position one side of a work piece on the rollers. A movable positioner 18 can move toward and away from each of the fixed positioners 15, and position the other side of the piece on the rollers 2.

Work pieces are conveyed onto the sloping rails 4, on which they stand by or wait in parallel with each other with the first or lowest piece stopped by the movable stoppers 6. Then, the work shifters 3 are moved upward to lift the first piece on the rails 4 higher than the movable stoppers 6. The lifted piece rolls down on the sloping support surfaces 12 of the shifters 3 toward the transfer section 1. Then, the shifters 3 are lowered so that the piece goes downward between the fixed and movable positioners 15,18, and is shifted from the sloping surfaces onto the horizontal rollers 2 in the transfer section 1. There is a need to adjust the space between each of the movable positioners 15 and the associated fixed positioner 18 dependently on the diameter of the pieces to sandwich a work piece between the positioners 15, 18. Each of the movable stoppers 6 and the associated movable positioner 15 are interlocked or linked so as to move together in the same direction. It is therefore possible to adjust the positions of the movable stoppers 6 and positioners 15 in place at the same time only by operating the shift means 7 for the movable stoppers 6. It is also possible to lock the movable stoppers 6 and positioners 15 in the adjusted positions at the same time by the lock means 8.

Each of the work shifters 3 is a plate having a Y-shaped sloping top support surface 12. Each of the shifters 3 is supported pivotally by a horizontal pin 2a, which extends at right angles with the work pieces supported on the sloping rails 4. The shifters 3 can pivot on the respective pins up and down along vertical planes in parallel with the pieces on the rails 4. The shifters 3 are normally retracted in their substantially horizontal positions. To shift a work piece, the shifters 3 pivot upward in the direction opposite to the direction in which work pieces are carried as can be seen in Fig.5 of JP-A-7-56256. While the shifters 3 are pivoting upward, their sloping top surfaces 12 lift the piece. Thus, the piece is lifted by the shifters 3 pivoting from their horizontal positions upward along the vertical planes in parallel with the piece in the direction opposite to the direction in which work pieces are carried. While the piece is lifted, it is moved by the frictional forces between it and the sloping top surfaces 12 of the shifters 3 in the direction opposite to the direction in which work pieces are carried. This may dislocate the ends of the piece shifted to the transfer section 1. As a result, the associated cutting apparatus may not cut the piece in precisely constant lengths.

Although each of the movable stoppers 6 and the associated movable positioner 15 are linked to move together in the same direction, they are independent, so that their linking structure is complex and they need more parts. It is also troublesome to mount or fit these parts.

### SUMMARY OF THE INVENTION

It is an object of the present invention to eliminate such work piece dislocation as mentioned above when the first work piece on the sloping rails is lifted by the work shifters and shifted to the work transfer section.

It is another object to simplify the structure of the movable stoppers and movable positioners and reduce the number of parts so that they are easy to mount.

According to the invention, work pieces W are conveyed onto sloping rails 4, on which they stand by in parallel with each other with the first piece stopped by movable stoppers 6. Then, work shifters 3 are elevated along vertical planes at right angles with the pieces on the rails, so that the first piece is lifted higher than the movable stoppers. The lifted piece rolls down on the sloping top support surfaces 12 of the shifters, and moves into a work transfer section 1. Then, the shifters are retracted downward along the vertical planes, so that the piece lowers between fixed positioners 19 and movable positioners 24 and are positioned in place on horizontal rollers 2.

The work piece W is lifted to its elevated position by the work shifters 3 moving upward along the vertical planes at right angles with the pieces on the sloping rails 4. The lifting forces of the shifters act on the lower side of the piece at right angles with it always while the shifters are moving upward. Accordingly, the piece can be shifted surely in place in the work transfer section 1 without being dislocated longitudinally.

### BRIEF DESCRIPTION OF THE DRAWINGS

Preferred embodiments of the present invention are described below in detail with reference to the accompanying drawings, in which:
Fig. 1 is a schematic plan view of a loading apparatus according to the invention;
Fig. 2 is an enlarged and detailed plan view of main part of the apparatus;
Fig. 3 is an enlarged elevational view in cross section taken along the line X - X of Fig. 1;
Fig. 4 is an enlarged elevational view in cross section taken along the line Y - Y of Fig. 1;
Fig. 5 is an enlarged elevational view in cross section taken along the line Z - Z of Fig. 1;
Fig. 6 is a schematic elevational view of a modified work shifter according to the invention.

### DETAILED DESCRIPTION OF THE PREFERRED EMBODIMENTS

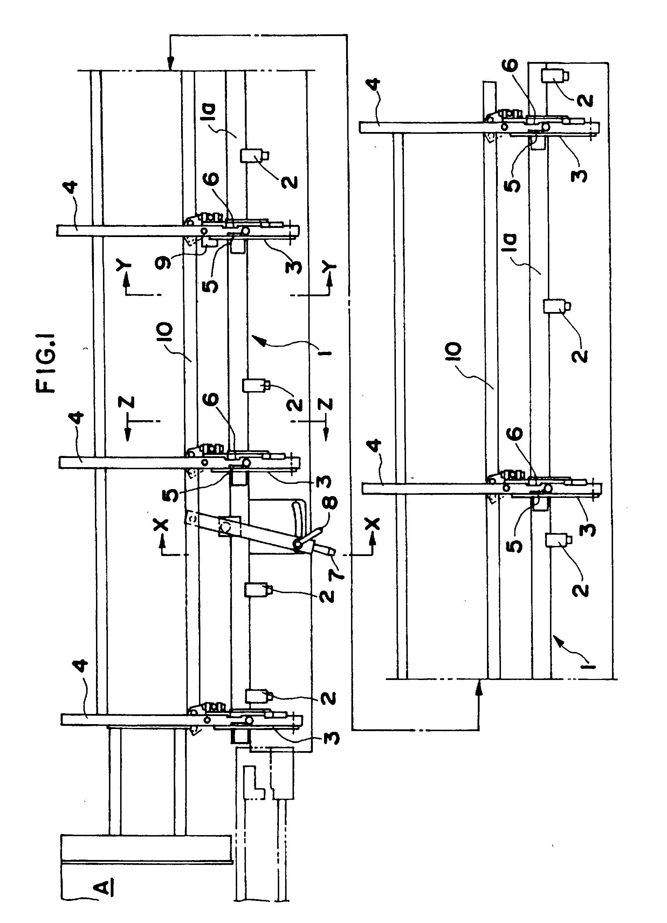

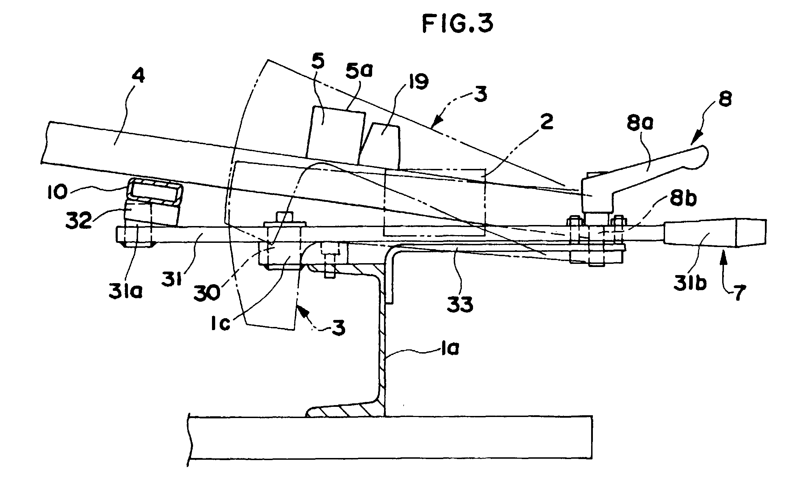

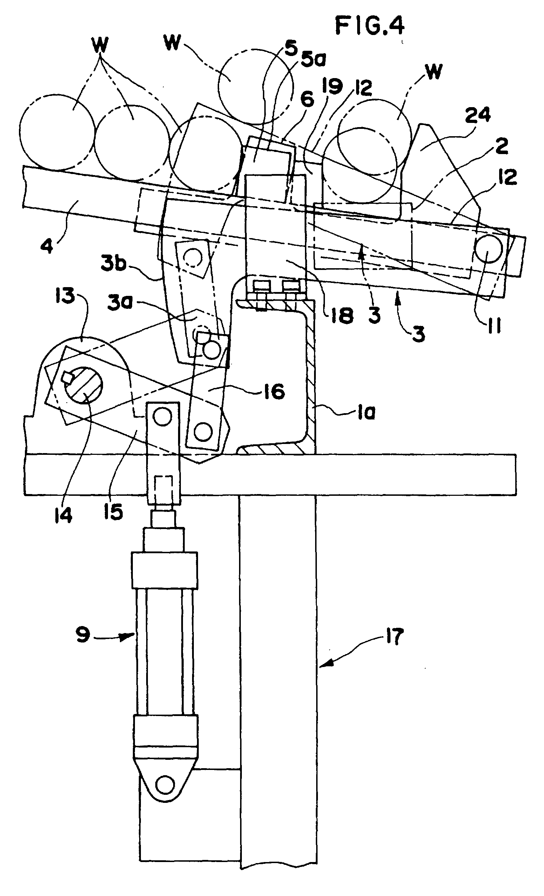

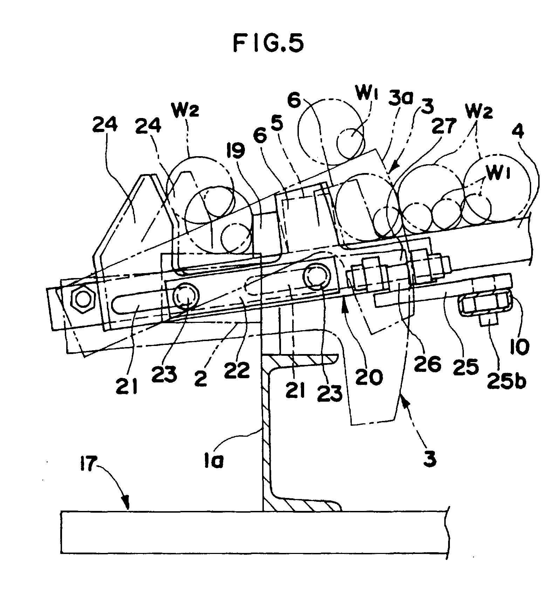

With reference to Fig. 1, the loading apparatus includes a long work transfer section 1, which constitutes a carrying path for work pieces to a cutting apparatus A. Horizontal rollers 2 and work shifters 3 are arranged at suitable intervals along the length of the transfer section 1, and at right angles with it. The rollers 2 are supported on a horizontal frame 1a, which is fixed to a machine frame 17, as shown in Figs. 4 and 5, and extends along the transfer section 1. As shown in Figs. 3 - 4, the frame 1a is square or rectangular in lateral cross section with one open side. Sloping rails 4 are fixed to the frame 17 at suitable intervals on one side of the transfer section 1, and extend at right angles with this section 1. The rails 4 overhang or protrude upward and outward from the transfer section 1 gently at an angle of about 5 - 10 degrees with the horizontal.

As shown in Figs. 1, 2 and 4, each work shifter 3 is an L-shaped plate, which extends along one side of one of the sloping rails 4 across the work transfer section 1, and has a sloping straight or linear top support surface 12. As shown in Fig. 4, the shifter 3 is supported pivotally at its outer end, which is the lower end of the top surface 12, by a horizontal pin 11 on the lower end of one side of the associated rail 4. The free end of the shifter 3 has an arm 3a formed integrally with it and extending downward. The free end also has an arcuate or circular end surface 3b. The arm 3a is connected pivotally through a link 16 with one end of an arm 15, the other end of which is fixed to a horizontal rotatable interlock shaft 14. The arm 15 is connected with a hydraulic cylinder 9 for driving all shifters 3 (Fig. 1). The cylinder 9 is mounted on the machine frame 17.

As shown by solid lines in Fig. 4, at least an inner portion of the top surface 12 of each work shifter 3 is positioned slightly below the top surface of the associated sloping rail 4 when the hydraulic cylinder 9 is retracted. When the cylinder 9 extends by a specified stroke, the shifter 3 pivots along a vertical plane, at right angles with the work pieces W on the rail 4, to its elevated position shown by two-dot chain lines in Fig. 4. Thus, the telescoping action of the cylinder 9 makes the shifters 3 reciprocate between the elevated and retracted positions. When each shifter 3 is in its bottom position shown by solid lines in Fig. 4, its overall top surface 12 is lower than the tops of the horizontal rollers 2.

The interlock shaft 14 is supported by bearings 13 on the machine frame 17, and is linked through the arms 15 and links 16 with the work shifters 3. The actuation of the single hydraulic cylinder 9 rotates the shaft 14 through the arm 15 by a desired angle. The rotation of the shaft 14 swings the shifters 3 as described above.

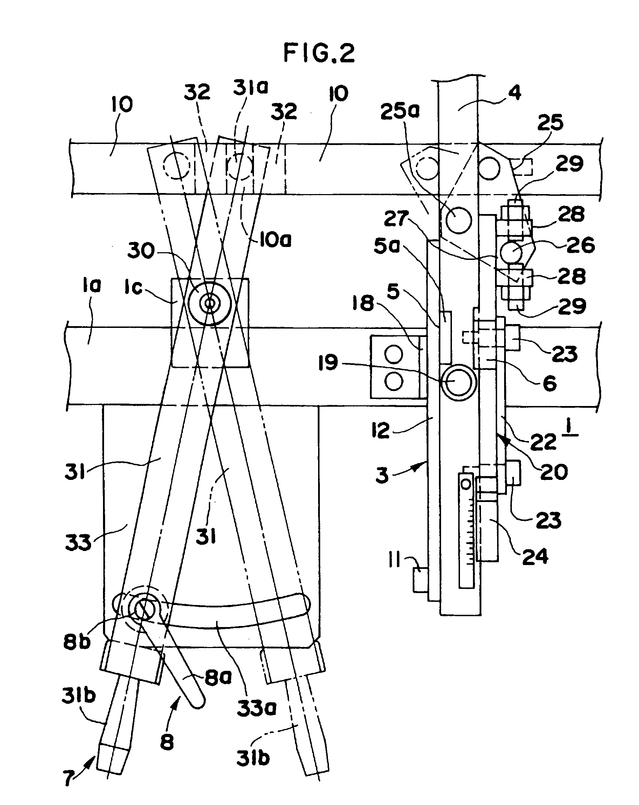

As shown in Figs. 2 and 4, the horizontal frame 1a supports a vertical guide plate 18, which is fixed to the horizontal frame 1a on the side of each work shifter 3 opposite the associated sloping rail 4. When the shifter 3 pivots, it is guided between this plate 18 and the adjacent side of the rail 4.

With reference to Figs. 1 - 5, each sloping rail 4 has a fixed stopper 5 and a movable stopper 6 both relatively near its lower end. The fixed stopper 5 is a square or rectangular plate, which protrudes upward from the rail 4. The top surface 5a of this stopper 5 is slightly lower than the upper limit position of the top surface 12 of the associated work shifter 3. The stopper top surface 5a inclines toward the lower end of the rail 4 as the shifter top surface 12 does. The rail 4 supports a conical roller 19 as a fixed positioning member on its top near the side of the stopper 5 which is adjacent the lower end of the rail 4. The roller 19 can idle on a vertical axis. The roller 19 defines or sets a reference position for positioning work pieces W.

As best shown in Fig. 5, the movable stopper 6 is integral with a long plate 20, which extends along the side of the sloping rail 4 opposite the associated work shifter 3. The plate 20 inclines at the same angle as the rail 4. The stopper 6 protrudes upward from a longitudinal middle portion of the plate 20. The plate 20 has a pair of slots 21, which extend and are spaced longitudinally of it. A horizontal guide pin 23 extends through each slot 21, and is fixed at one end to the adjacent side of the rail 4. The other end of the pin 23 is fixed to a support plate 22, which extends along the outer side of the long plate 20. Therefore, the long plate 20 is supported slidably along the side of the rail 4 longitudinally of it.

The long plate 20 has a movable positioner 24, which protrudes upward and integrally from its lower end. The positioner 24 has a mountainlike or triangular top. The movable positioner 24 and stopper 6 are integral with the plate 20, and therefore move together when the plate 20 slides along the side of the sloping rail 4, as described above.

As shown in Figs. 2, 3 and 5, the long plate 20 supports one corner of a nearly triangular link plate 25 pivotally on a pin 25a (Fig. 2) at its upper end under the associated sloping rail 4. The pin 25a extends at right angles with the rail 4 and plate 25. The long plate 20 has a pair of brackets 28 fixed to it, with which a pair of bolts 29 engage respectively. The bolts 29 extend in parallel with the associated sloping rail 4, and are aligned axially with each other. The bolts 29 define a space 27 between them. The triangular plate 25 supports a roller 26 on its top side at another corner. The roller 26 can rotate on an axis at right angles with the triangular plate 25, and is positioned in the space 27. The triangular plate 25 also supports a link pin 25b (Fig. 5) on its bottom side at the other corner. The pin 25b extends at right angles with the plate 25. The pins 25b for all rails 4 are linked rotatably to a horizontal link bar 10, which extends along the work transfer section 1.

As shown in Figs. 2 and 3, a shift means 7 for the movable stoppers 6 includes a horizontal operating lever 31, which can swing on a vertical pin 30. The pin 30 is supported on a seat or support 1c, which is fixed to the horizontal frame 1a under the work transfer section 1. The lever 31 has a handle or grip 31b on one end and a vertical pin 31a on the other end. The pin 31a engages slidably with a groove 10a, which is formed across the bottom of the horizontal link bar 10. The groove 10a is defined between a pair of blocks 32, which protrude from the bottom of the bar 10. When the lever 31 swings, the bar 10 moves longitudinally, pivoting the link plate 25, so that the movable stoppers 6 shift along the respective sloping rails 4.

As also shown in Figs. 2 and 3, a lock means 8 includes a guide plate 33, which is fixed to the horizontal frame 1a under the horizontal lever 31. This plate 33 has a horizontal guide slot 33a, which is circular and concentric with the vertical pin 30. A vertical lock bolt 8b has a lever 8a, engages with the horizontal lever 31 near the handle 31b, and extends slidably through the slot 33a. The horizontal lever 31 can be fixed to the plate 33 by turning the lock lever 8a, which tightens the bolt 8b. The plate 33 has at the slot 33a a scale or graduation (not shown) for indicating the diameters of work pieces.

The operation of the loading apparatus is explained below with reference to Fig. 5.

Work pieces W1 (dashed lines) and W2 (two-dot chain lines) may be steel bars, steel pipes or the like, which are circular in cross section. For the pieces W1 having a small diameter, the horizontal lever 31 of the shift means 7 is swung by a specified angle to shift the long plates 20 to their upper positions (right in Fig. 5) shown by dashed lines in Fig. 5. This shifts the movable stoppers 6 to their upper positions on the left sides (Fig. 5) of the circular end surfaces 3b of the work shifters 3. This also shifts the movable positioners 24 to their upper positions on the left sides (Fig. 5) of the fixed rollers 19. Then, the lock lever 8a is turned to fix the shift means 7 to the plate 33.

When the long plates 20 are in the upper positions, the diameter of the small work pieces W1 is nearly equaled by the distance along each sloping rail 4 between the circular end surface 3b of the associated work shifter 3 and the adjacent side of the associated movable stopper 6. On the other hand, the diameter of the pieces W1 is slightly smaller than the space across the work transfer section 1 between the associated positioner 24 and fixed roller 19.

Before shift operation, the work shifters 3 wait or stand by in their lower retracted positions, which are nearly horizontal, shown by solid lines in Fig. 5.

The work pieces W1 are placed in order on the sloping rails 4 in parallel with the work transfer section 1. The pieces W1 roll down on the rails 4 by gravity, and stand by in parallel on the rails 4 with the first or lowest piece W1 stopped by the stoppers 6. The free ends of the top surfaces 12 of the work shifters 3 are positioned between the first and second pieces W1.

Then, the hydraulic cylinder 9 is extended to pivot the work shifters 3 from their retracted positions, shown by dashed lines in Fig. 5, to their elevated positions, shown by two-dot chain lines in Fig. 5. As a result, the top surfaces 12 of the shifters 3 lift the first work piece W1.

In the elevated positions of the work shifters 3, the free ends of their top surfaces 12 are higher than the tops of the movable stoppers 6. As a result, the lifted work piece W1 rolls down by gravity on the surfaces 12 until it is stopped by the movable positioners 24.

Then, the hydraulic cylinder 9 is retracted to lower the work shifters 3 to their retracted positions shown by dashed lines in Fig. 5. As a result, the work piece W1 moves down between each fixed roller 19 and the associated movable positioner 24, and is positioned on the horizontal rollers 2, which are shown by two-dot chain lines in Fig. 5. While the piece W1 is moving down, it is supported by the positioners 24 and shifters 3. Therefore, the piece W1 moves down slowly or gently with the shifters 3, and are placed on the rollers 2 with little shock.

While the work shifters 3 are shifting the work piece W1, and particularly lifting it, they swing upward in the vertical planes at right angles with the work pieces W1 on the sloping rails 4. The lifting forces of the shifters 3 act on the bottom of the piece W1 at right angles with it always while the shifters 3 are moving up. Therefore, the piece W1 is not, dislocated longitudinally, as the case may be with the conventional apparatus, but the piece W1 is positioned in place in the work transfer section 1.

After the work shifters 3 lift the first work piece W1, and before they have returned to their retracted positions, the second and upper pieces W1, which rest on the sloping rails 4, are stopped by the circular end surfaces 3b of the shifters 3. When the shifters 3 have retracted, these remaining pieces W1 roll down on the rails 4 and are stopped by the movable stoppers 6.

The work pieces W1 thus shifted to the work transfer section 1 are carried longitudinally and intermittently to the cutter A by the vice mechanism (not shown) of the cutter A, where they are cut in a desired length. After each piece W1 is cut, the shifting operation is repeated, so that the pieces W1 on the sloping rails 4 are shifted one after another to the transfer section 1, from which they are carried to the cutter A.

To switch the work pieces to be handled from the small pieces W1 to the pieces W2 having a large diameter, which are shown by two-dot chain lines in Fig. 5, the lock means 8 is loosened, and the horizontal lever 31 of the shift means 7 is swung to shift the long plates 20 to their lower positions shown by two-dot chain lines in Fig. 5. This shifts the movable stoppers 6 to their lower positions for coping with the larger diameter of the pieces W2. This also shifts the movable positioners 24 to their lower positions, which are spaced from the respective fixed rollers 19 by a distance slightly larger than the diameter of the pieces W2. Then, the plates 20 are fixed in these positions by tightening the lock means 8. The pieces W2 can be shifted in the same way as the small pieces W1.

There is a need to adjust the space between each movable positioner 24 and the associated fixed roller 19 dependently on the work diameter. For a change in work diameter from a particular value, it is necessary to shift the movable stoppers 6 and positioners 24 by a nearly equal distance from their respective positions for the value along the respective sloping rails 4. Specifically, it is necessary to move the parts 6 and 24 toward the lower ends of the rails 4 for a larger diameter, and in the opposite direction for a smaller diameter. According to this invention, each stopper 6 and the associated positioner 24 are integral, and can therefore be adjusted to proper positions at the same time by the shift means 7 moving the associated long plate 20. The parts 6 and 24 can also be fixed in these positions at the same time by the lock means 8. In addition, the integral parts can be made of a single plate or the like, and are therefore easy to make, mount and handle.

Thus, the shift means 7 can adjust the positions of the movable stoppers 6 and positioners 24 at the same time. It is therefore possible to cope quickly and precisely with changes in work diameter. In addition, for various work diameters, the work pieces standing by on the sloping rails 4 can be shifted one after another to the work transfer section 1 without drop shock.

The fixed stoppers 5 may be omitted, and other parts or elements may be modified in design from the embodiment. The loading apparatus of this invention can also be applied to work carriage sections for other apparatus than cutting apparatus, into which long work pieces are carried longitudinally to be processed.

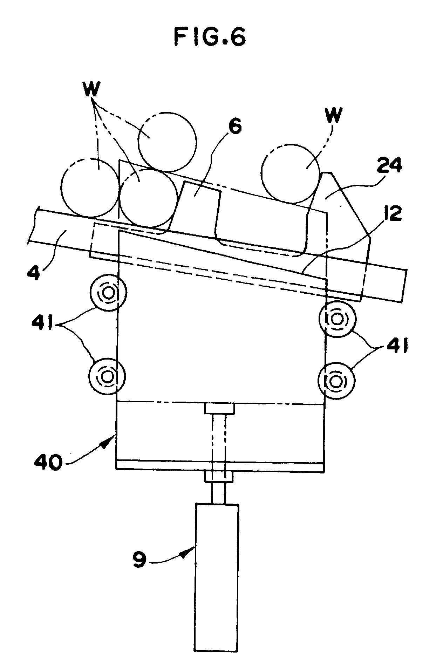

Fig. 6 shows the work shifter 40 of the other embodiment of the present invention. The shifter 40 includes a vertical plate, which has a sloping top support side 12 and vertical sides. The vertical sides are guided by guide rollers 41 so that the shifter 40 can move vertically along a vertical plane at right angles with the work pieces W supported on sloping rails 4. The bottom of the shifter 40 is interlocked with a hydraulic cylinder 9, which can move it vertically between its lower retracted position, shown by solid lines, and its elevated position, shown by two-dot chain lines. The shifter 40 operates similarly with the shifters 3 of the previous embodiment. Because the shifter 40 can move vertically along a vertical plane at right angles with the pieces W, it is simple in structure with a small number of parts, and can be made at low costs.

## Claims

1. An apparatus for loading long workpieces which have a circular cross-section, comprising:
- a horizontal work transfer section (1) having horizontal rollers (2) to be loaded with one of the workpieces (W);
- a plurality of sloping rails (4) for downwardly rollably supporting workpieces (W) in parallel, arranged to extend upwards across said work transfer section from one lateral side of the section;
- a plurality of movable stoppers (6) for stopping the lowermost of the workpieces (W) on the sloping rails, disposed shiftably along the sloping rails;
- a shifting mechanism (7) for shifting said movable stoppers (6) along the sloping rails;
- a lock means (8) for locking said movable stoppers in a preselected position;
- a plurality of workpiece shifting means (3) for lifting the lowermost workpiece (W) on the sloping rails higher than the movable stoppers and then moving it over onto said horizontal rollers (2) in the work transfer section (1);
- a plurality of fixed positioners (19) disposed on each of said sloping rails at another lateral side opposite to said one lateral side of the work transfer section for regulating one lateral side of the workpiece (W) and thereby laterally confining the workpiece (W) to a preselected position on the horizontal rollers;
- a plurality of movable positioners (24) for confining the workpiece (W) to the preselected position in cooperation with said fixed positioners (19), disposed at said one lateral side of the work transfer section (1) capable of moving along each of the sloping rail (4) toward and away from the fixed positioners (19);
**characterized in that**
- each of said workpiece shifting means (3) has a top support surface (12) sloping downwards toward the work transfer section, and is so adapted to move uprightly along a vertical plane extending at a right angle across the workpieces (W) supported on the sloping rails (4).

2. The apparatus according to claim 1, wherein each of said workpiece shifting means (3) is pivotable uprightly about the lower end of said sloping top support surface (12) along the vertical plane.

3. The apparatus according to claim 1, wherein each of said workpiece shifting means (3) is so adapted as to elevate in whole uprightly along the vertical plane.

4. The apparatus according to any one of claims 1 to 3, wherein each of said movable stoppers (6) is formed integrally with the associated movable positioner (24).

5. The apparatus according to claim 4, wherein each of said movable stoppers (6) and the associated movable positioner (24) are formed integrally with an elongated side plate (20) which is slidably disposed along a lateral side face of each of the sloping rails (4), and protrude upwardly from a longitudinal middle position and a lower end, respectively, of the elongated side plate.

## Patentansprüche

1. Eine Vorrichtung zum Zuführen von langen Werkstücken, welche einen kreisförmigen Querschnitt besitzen, umfassend:
- einen horizontalen Arbeits-Überführungsabschnitt (1), der horizontale Rollen (2) besitzt, die mit einem der Werkstücke (W) zu beladen sind;
- eine Vielzahl von schrägen Schienen (4) zum nach unten gerichteten, rollbaren Tragen von parallelen Werkstücken (W), welche Schienen angeordnet sind, um sich von einer Seite des Arbeits-Überführungsabschnittes nach oben über den Arbeits-Überführungsabschnitt erstrecken;
- eine Vielzahl von beweglichen Stoppern (6) zum Stoppen des untersten der Werkstücke (W) auf den schrägen Schienen, welche Stopper verschiebbar entlang der schrägen Schienen angeordnet sind;
- einen Verschiebungsmechanismus (7) zum Verschieben der beweglichen Stopper (6) entlang der schrägen Schienen;
- eine Verriegelungseinrichtung (8) zum Verriegeln der beweglichen Stopper in einer vorgewählten Position;
- eine Vielzahl von Werkstückverschiebeeinrichtungen (3) zum Anheben des untersten Werkstückes (W) auf den schrägen Schienen höher als die beweglichen Stopper und dann zum Bewegen des Werkstückes über und auf die horizontalen Rollen (2) in dem Arbeits-Überführungsabschnitt (1);
- eine Vielzahl von feststehenden Positioniereinrichtungen (19), die auf jeder der schrägen Schienen an einer anderen Seite, welche der einen Seite des Arbeits-Überführungsabschnittes gegenüberliegt, angeordnet sind, zum Justieren einer Seite des Werkstückes (W) und dadurch zum seitlichen Beschränken des Werkstückes (W) zu einer vorgewählten Position auf den horizontalen Rollen;
- eine Vielzahl von beweglichen Positioniereinrichtungen (24) zum Beschränken des Werkstückes (W) zu der vorgewählten Position in Zusammenwirkung mit den feststehenden Positioniereinrichtungen (19), welche bewegliche Positioniereinrichtung (24) an der einen Seite des Arbeits-Überführungsabschnittes (1) angeordnet und dazu geeignet sind, sich entlang jeder der schrägen Schienen (4) zu den feststehenden Positioniereinrichtungen (19) und von diesen weg zu bewegen,
**dadurch gekennzeichnet, dass**
- jede der Werkstückverschiebungseinrichtungen (3) eine obere Tragefläche (12) besitzt, die nach unten zu dem Arbeits-Überführungsabschnitt hin geneigt ist, und so ausgelegt ist, dass sie sich aufrecht entlang einer vertikalen Ebene bewegen, die sich in einem rechten Winkel über die Werkstücke (W) erstreckt, die auf den schrägen Schienen (4) getragen sind.

2. Die Vorrichtung nach Anspruch 1, worin jede der Werkstückverschiebungseinrichtungen 3 aufrecht und entlang der vertikalen Ebene um das untere Ende der geneigten oberen Tragefläche (12) schwenkbar ist.

3. Die Vorrichtung nach Anspruch 1, worin jede der Werkstückverschiebungseinrichtungen (3) so ausgelegt ist, dass sie sich als Ganzes aufrecht entlang der vertikalen Ebene hebt.

4. Die Vorrichtung nach einem beliebigen der Ansprüche 1 bis 3, worin jeder der beweglichen Stopper (6) integral mit den zugeordneten beweglichen Positioniereinrichtungen (24) ausgebildet ist.

5. Die Vorrichtung nach Anspruch 4, worin jeder der beweglichen Stopper (6) und die zugeordneten beweglichen Positioniereinrichtungen (24) integral mit einer langgestreckten Seitenplatte (20) ausgebildet sind, welche verschiebbar entlang einer Seite von jeder der schrägen Schienen (4) angeordnet ist, und welche jeweils von einer longitudinalen Mittelposition und einem unteren Ende der langgestreckten Seite hervorstehen.

## Revendications

1. Appareil pour charger des articles allongés qui ont une section transversale circulaire, comprenant :
- une section de transfert d'articles horizontale (1) ayant des rouleaux horizontaux (2) sur lesquels on charge l'un des articles (W) ;
- une pluralité de rails en pente (4) pour supporter des articles (W) en parallèle, de manière que ceux-ci roulent vers le bas, lesdits rails étant agencés de manière à s'étendre vers le haut en traversant ladite section de transfert depuis un côté latéral de la section ;
- une pluralité d'arrêts mobiles (6) pour arrêter l'article (W) situé le plus en bas sur les rails en pente, lesdits arrêts étant disposés de façon déplaçable le long des rails en pente ;
- un mécanisme de déplacement (7) pour déplacer lesdits arrêts mobiles (6) le long des rails en pente ;
- des moyens de blocage (8) pour bloquer lesdits arrêts mobiles dans une position préalablement choisie ;
- une pluralité de moyens de déplacement d'article (3) pour soulever l'article (W) situé le plus en bas sur les rails en pente jusqu'à une position plus élevée que les arrêts mobiles, puis pour le faire déplacer jusque sur lesdits rouleaux horizontaux (2) dans la section de transfert (1);
- une pluralité d'éléments de positionnement fixes (19) disposés sur chacun desdits rails en pente sur un autre côté latéral opposé au premier côté latéral de la section de transfert, afin de réguler un côté latéral de l'article (W) et confiner ainsi latéralement l'article (W) à une position préalablement choisie sur les rouleaux horizontaux ;
- une pluralité d'éléments de positionnement mobiles (24) pour confiner l'article (W) à la position préalablement choisie, en coopération avec lesdits éléments de positionnement fixes (19), disposés au niveau dudit premier côté latéral de la section de transfert (1) et capables de se déplacer le long de chacun des rails en pente (4) en rapprochement et en éloignement des éléments de positionnement fixes (19) ;
**caractérisé en ce que** :
- chacun desdits moyens de déplacement d'article (3) comporte une surface de support supérieure (12) en pente vers le bas en direction de la section de transfert, et est ainsi adapté à se déplacer vers le haut le long d'un plan vertical s'étendant à angle droit en travers des articles (W) supportés sur les rails en pente (4).

2. Appareil selon la revendication 1, dans lequel chacun desdits moyens de déplacement d'article (3) est capable de pivoter vers le haut autour de l'extrémité inférieure de ladite surface de support supérieure en pente (12) le long du plan vertical.

3. Appareil selon la revendication 1, dans lequel chacun desdits moyens de déplacement d'article (3) est ainsi conçu qu'il s'élève en totalité vers le haut le long du plan vertical.

4. Appareil selon l'une quelconque des revendications 1 à 3, dans lequel chacun desdits arrêts mobiles (6) est formé de manière intégrale avec l'élément de positionnement mobile associé (24).

5. Appareil selon la revendication 4, dans lequel chacun desdits arrêts mobiles (6) et l'élément de positionnement mobile associé (24) sont formés de manière intégrale avec une plaque latérale allongée (20) qui est disposée en coulissement le long d'une face latérale de chacun des rails en pente (4), et font saillie vers le haut depuis une position médiane longitudinale et depuis une extrémité inférieure, respectivement, de la plaque latérale allongée.
